## Europäisches Patentamt

(19) **European Patent Office**

**Office européen des brevets**

(11) Veröffentlichungsnummer : **0 147 887**
**B1**

(12) **EUROPÄISCHE PATENTSCHRIFT**

(45) Veröffentlichungstag der Patentschrift :
23.03.88

(51) Int. Cl.⁴ : **C 03 C  1/00,** C 03 B  19/00

(21) Anmeldenummer : **84201834.3**

(22) Anmeldetag : **11.12.84**

(54) Verfahren zum Herstellen monolithischer Glaskörper.

(30) Priorität : **19.12.83 NL 8304348**

(43) Veröffentlichungstag der Anmeldung :
**10.07.85 Patentblatt 85/28**

(45) Bekanntmachung des Hinweises auf die Patenterteilung : **23.03.88 Patentblatt 88/12**

(84) Benannte Vertragsstaaten :
**AT BE CH DE FR GB IT LI NL SE**

(56) Entgegenhaltungen :
**EP-A- 0 067 741**
**JOURNAL OF MATERIALS SCIENCE, Band 17, Nr. 11, 1982, Seiten 3371-3379, Chapman and Hall Ltd.; J. ZARZYCKI u.a.: "Synthesis of glasses from gels: the problem of monolithic gels"**
**BULLETIN DE LA SOCIETE CHIMIQUE DE FRANCE, Nr. 5, 1968, Seiten 1906-1911; G.A. NICOLAON u.a.: "Préparation des aérogels de silice à partir d'orthosilicate de méthyle en milieu alcoolique et leurs propriétés"**

(73) Patentinhaber : **N.V. Philips' Gloeilampenfabrieken**
**Groenewoudseweg 1**
**NL-5621 BA Eindhoven (NL)**

(72) Erfinder : **van Lierop, Joseph Gijsbertus**
**c/o INT. OCTROOIBUREAU B.V. Prof. Holstlaan 6**
**NL-5656 AA Eindhoven (NL)**
Erfinder : **Felder, Willy Johannes Bertha**
**c/o INT. OCTROOIBUREAU B.V. Prof. Holstlaan 6**
**NL-5656 AA Eindhoven (NL)**
Erfinder : **Huizing, Albert**
**c/o INT. OCTROOIBUREAU B.V. Prof. Holstlaan 6**
**NL-5656 AA Eindhoven (NL)**
Erfinder : **Krol, Denise Maria**
**c/o INT. OCTROOIBUREAU B.V. Prof. Holstlaan 6**
**NL-5656 AA Eindhoven (NL)**
Erfinder : **Smets, Bruno Maria Jean**
**c/o INT. OCTROOIBUREAU B.V. Prof. Holstlaan 6**
**NL-5656 AA Eindhoven (NL)**

(74) Vertreter : **Auwerda, Cornelis Petrus et al**
**INTERNATIONAAL OCTROOIBUREAU B.V. Prof. Holstlaan 6**
**NL-5656 AA Eindhoven (NL)**

## Beschreibung

Die Erfindung bezieht sich auf ein Verfahren zum Herstellen monolithischer Glaskörper und zwar dadurch, dass aus einer alkoholischen Lösung, die eine Alkoxisilanverbindung enthält, ein monolithisches Gel hergestellt wird, in welcher Verbindung das monolithische Gel getrocknet wird durch Erhitzung in einem hermetisch abgeschlossenen Raum bis zu einer Temperatur über der kritischen Temperatur des Lösungsmittels, wonach der Druck verringert und das Gel durch Erhitzung verdichtet wird.

Ein derartiges Verfahren ist bekannt aus Zarzycki, Prassas und Phalippov : « Synthesis of Glasses from Gels : the problem of monolithic gels » in Journal of Materials Science 17 (1982) S. 3371-3379. In dieser Veröffentlichung wird ein Verfahren beschrieben, nach dem ein Gel aus einer Lösung von Tetramethoxysilan in Methanol hergestellt wird, welcher Lösung zum Hydrolisieren des Silans eine ausreichende Menge Wasser zugefügt wird. Nachdem sich das Gel gebildet hat, wird das Gefäss mit dem Gel in einen Autoklaven gegeben. In den Autoklaven wird eine zusätzliche Menge Methanol gegeben, so dass beim Erreichen der kritischen Temperatur auch der kritischen Druck erreicht wird. Nachdem die Temperatur die kritische Temperatur von Methanol überschritten hat, wird der Druck in dem Autoklaven allmählich verringert. Auf diese Weise würde ein trockenes monolithisches Gel erhalten werden können, ohne dass beim Trocknen Schwindung auftritt. Nach der Veröffentlichung erfolgt das Evakuieren in drei bis vier Stunden. Diese Trockenzeit ist gegenüber Trockenzeiten bei atmosphärischem Druck, die etwa eine Woche betragen können, besonders günstig (siehe beispielsweise Electronics Letters 18 (1982) S. 499 : « New optical Fibre Fabrication Method »).

Das Trocknen eines Gels über der kritischen Temperatur in einem Autoklaven bietet den Vorteil, dass beim Ablassen des Druckes keine Kapillarkräfte in den Poren des Gels auftreten können, weil in den Poren keine Flüssigkeit-Dampf-Trennfläche gebildet wird.

In Nicolaon und Teichner : « Préparation des aérogels de silice à partir d'orthosilicate de méthyle en milieu alcoolique et leurs propriétés » Bull. de la Société Chimique de France 1968, S. 1906-11 wird angegeben, dass nicht nur die Trocknung des Gels unter hyperkritischen Umständen, sondern auch die Bildung des Gels selbst in dem Autoklaven erfolgen kann. Dazu werden Fässer mit einer zur Gelbildung geeigneten Lösung von Tetramethoxysilan in einen Autoklaven gestellt. Die Hydrolyse und die darauffolgende Gelbildung erfolgt in dem geschlossenen Autoklaven beim Anwärmen bis zur überkritischen Temperatur.

Bei diesen bekannten Verfahren ist das innere Volumen des verwendeten hermetisch geschlossenen Raumes kleiner als das kritische Volumen der vorhandenen Alkoholmenge. Unter idealen Umständen dürften in dem Alkohol beim Erhitzen bis zur überkritischen Temperatur keine Siedeerscheinungen auftreten. Unter idealen Umständen wird in diesem Zusammenhang verstanden, dass die Temperatur in dem hermetisch geschlossenen Raum gleichmässig erhöht werden kann, ohne dass Temperaturgradienten auftreten. In der Praxis zeigt es sich jedoch, dass dies besonders schwer verwirklicht werden kann, insbesondere ist dies der Fall mit Autoklaven mit einem grossen Inhalt, die man bei der industriellen Durchführung dieser Verfahren jedoch verwenden muss. In der Praxis sind Siedeerscheinungen durch örtliche Überhitzung in der gelierenden Lösung und nach der Bildung des Gels kaum vermeidbar. Dies führt zu Beschädigung der monolithischen Gele.

Ein weiterer Nachteil ist, dass beim Anwärmen bis zurkritischen Temperatur in der Praxis oft Flüssigkeit-Gas-Trennflächen in den Poren des Gels gebildet werden. Unter dem Einfluss der dadurch in den Poren des Gels auftretenden Kapillarkräfte kann Schwindung oder sogar Desintegration des Gels auftreten.

Die Erfindung hat nun zur Aufgabe, die Nachteile der bekannten Verfahren weitgehendst zu vermeiden. Diese Aufgabe wird nach der Erfindung mit einem Verfahren gelöst, dass das Kennzeichen aufweist, dass in den hermetisch geschlossenen Raum ein Gas eingefüllt wird bis ein Vordruck erreicht ist, der so hoch ist, dass während der Erhitzungsperiode auf eine Temperatur über der kritischen Temperatur in dem Lösungsmittel keine Siedeerscheinungen auftreten können. Die Höhe des Vordruckes bei Raumtemperatur kann an Hand der Formel $PV = RT$ und des (der) Phasendiagramms(e) der zu Anwendung kommenden Lösungsmittel ermittelt werden. Bei Versuchen hat es sich herausgestellt, dass die Höhe des Vordruckes für die entgültige Dichte (Gewicht/Volumen) des monolithischen Gels bestimmend ist. Dabei wurde über aschenderweise ermittelt, dass je höher der Vordruck gewählt wird, umso kleiner die Dichte der monolithischen Gele ist, die mit dem Verfahren nach der Erfindung hergestellt werden. Dadurch, dass ein geeigneter Vordruck gewählt wird, kann erreicht werden, dass das monolithische Gel beim Erhitzen auf eine Temperatur über der kritischen Temperatur und beim Ablassen des Druckes nicht schwindet und folglich nach Trocknung Form und Abmessungen aufweist, wie diese bei der Bildung des Gels vorlagen. Offenbar wird durch Einstellen eines ausreichend hohen Vordruckes die Bildung von Flüssigkeit-Gas-Trennflächen in den Poren des Gels unterdrückt und/oder der nachteilige Einfluss davon ausgeglichen.

Es hat sich dabei nicht als notwendig herausgestellt, dass das Volumen des hermetisch geschlossenen Raumes kleiner ist als das kritische Volumen der in dem Raum vorhandenen Menge alkoholischen Lösungsmittels. Während der Erhitzung bis zu einer Temperatur über der kritischen Temperatur ist bei jeder Temperatur der Gesamtdruck in dem hermetisch geschlossenen Raum jeweils höher als der Sättigungsdampfdruck des Lösungsmittels, das bei der Herstellung des Gels verwendet wird. Bei einem Gemisch von Lösungsmitteln mit unterschiedlichen Kritischen Temperaturen wird bis zu einer Temperatur über der höchstens kritischen Temperatur jeglichen vorhandenen Lösungsmittels erhitzt. Geeignete Gase oder niedrig siedende Stoffe, die zum Einstellen eines Vordrucks benutzt werden können, sind beispielsweise Wasserstoff, Helium, Stickstoff, Sauerstoff, Chlor, Thionylchlorid und Argon.

Die Temperatur, bis zu der erhitzt werden kann, wird im Grunde, soweit sie über der kritischen Temperatur des (der) Lösungsmittel(s) liegt, nur beschränkt durch den Druck und die Temperatur, gegen die die Wände des hermetisch abschliessbaren Raumes beständig sind und die Temperatur, bei der organische Stoffe, die in diesem Raum vorhanden sind, zu verkohlen anfangen. Bei Verwendung eines Lösungsmittels, das völlig oder zu einem grossen Teil aus Äthanol besteht, wird vorzugsweise ein Vordruck von mindestens $50 \cdot 10^5$ Pa angewandt, wenn man während der Erhitzung bis zu einer Temperatur über der kritischen Temperatur und bei dem darauffolgenden Ablassen des Druckes Schwindung des monolithischen Gels vermeiden will.

Es hat sich herausgestellt, dass das Ablassen des Druckes besonders schnell, beispielsweise in weniger als einer Stunde, erfolgen kann.

Eine Unterdruckung der Schwindung ist insbesondere von Bedeutung, wenn beabsichtigt wird, mit dem Verfahren nach der Erfindung monolithische Gele in Form von Rohren herzustellen, beispielsweise in einem zylinderförmigen Gefäss, in dem zentral ein Zylinder angeordnet ist, dessen Achse mit der des zylinderförmigen Gefässes zusammenfällt. Wenn das Gel beim Trocknen schwinden würde, würde das monolithische Gel nur schwer ohne Beschädigung aus einer derartigen Form entnommen werden können.

Geeignete Ausgangsstoffe zur Herstellung monolithischer Gele, die im wesentlichen aus $SiO_2$ bestehen, sind Tetramethoxysilan $Si(OCH_3)_4$ und Tetraethoxysilan $Si(OC_2H_5)_4$. Lösungen dieser Stoffe in den betreffenden Alkoholen können noch Verbindungen anderer Elemente, deren Oxidegläser bilden können, oder die mit $SiO_2$ Gläser bilden können, zugefügt werden, beispielsweise um die Brechzahl des Glaskörpers, der nach Verdichten des Gels erhalten wird, auf einen bestimmten Wert einzustellen und/oder um andere physikalische Eigenschaften zu regeln. Derartige Verbindungen sind beispielsweise Alkoxyverbindungen aus Aluminium, Titan, Borium, Germanium u. dgl. In bestimmten Fällen können auch Nitrate, Karbonate, Azetate und andere Verbindungen, die sich leicht zersetzen, unter Bildung von Oxiden verwendet werden.

In dem erfindungsgemässen Verfahren wird vorzugsweise aus mehreren noch näher zu erläuternden Gründen Tetraethoxysilan und das Lösungsmittel Äthanol verwendet. Diese Stoffe können in hoher Reinheit erhalten werden, während Äthanol weniger giftig ist als Methanol.

Bei Verwendung von Tetraethoxysilan wird eine Lösung hergestellt, die mindestens 1 mol. Tetraethoxysilan je Liter Äthanol enthält ; dieser Lösung wird je mol Tetraethoxysilan mindestens 2 mol. Wasser zugefügt, dessen pH-Wert mit einer flüchtigen Base auf einen pH-Wert zwischen 7 und 8 gebracht wird, beispielsweise mit Hilfe von Ammoniak.

Wenn der Lösung von Tetraethoxysilan in Äthanol 4-8 mol. Wasser je mol. Tetraethoxysilan zugefügt wird, tritt nur wenig oder keine Schwindung während der Bildung des monolithischen Gels auf. Die Formgenauigkeit ist am grössten bei einer Menge von 5-7 mol. Wasser je mol. Tetraethoxysilan. Die Konzentration an Tetraethoxysilan je Liter Äthanol beträgt vorzugsweise 2 bis 6 mol.

Wenn eine wässrige Lösung einer flüchtigen Base verwendet wird um die Wassermenge auf den gewünschten pH-Wert zu bringen, zählt die zugefügte Wassermenge bei der Wassermenge, die für die Hydrolyse notwendig ist, mit.

Bei Anwendung des erfindungsgemässen Verfahrens werden die Lösungen in Gefässen geeigneter Form und Abmessung in den Autoklaven gestellt. Das Gefäss entspricht in Form und Abmessungen der Form und den Abmessungen des monolithischen Gels, das man herzustellen wünscht. Das Gefäss und ein gegebenenfalls darin angeordneter Zylinder, wenn ein rohrförmiges Gel hergestellt wird, kann aus einem beliebigen Material bestehen, das gegenüber den verwendeten Flüssigkeiten inert ist, beispielsweise Quarz. Eine Haftung der Gele kann vermieden werden dadurch, dass zumindest die Oberflächen, die mit der gelierenden Flüssigkeit in Berührung kommen mit einem Stoff, wie Silikonkautschuk u. dgl. überzogen werden, die von der Flüssigkeit nicht angegriffen werden.

Nach der Bildung des Gels kann Verdichtung erfolgen und zwar durch Erhitzung während gewisser Zeit auf eine hohe Temperatur, beispielsweise auf 1300 °C. Abhängig von der Erhitzungsdauer wird ein mehr oder weniger poröser Körper erhalten. Es ist möglich, einen nicht porösen Körper herzustellen, beispielsweise dadurch, dass in einem Tempo von 300 °C/Stunde die Temperatur auf 1300 °C gebracht und diese Temperatur etwa eine Stunde lang beibehalten wird. Die Erhitzung kann völlig oder teilweise in einer chlorhaltigen Atmosphäre durchgeführt werden, um die letzten Alkoxygruppen aus dem Gel zu vertreiben.

Mit dem erfindungsgemässen Verfahren können Glaskörper beliebiger Form und Porosität hergestellt werden.

Die mit dem erfindungsgemässen Verfahren erhaltenen Glaskörper können bei der Herstellung optischer Fasern, bei der Herstellung von Trägerkörpern für Katalysatoren (die Körper können auch selbst als Katalysatoroberfläche verwendet werden) zum selektiven Trennen von Elementen und als Molekularsiebe verwendet werden.

An Hand der folgenden Ausführungsbeispiele wird die Erfindung nun näher erläutert.

Ausführungsbeispiel I :

Um eine Lösung mit einem Molverhältnis von $4C_2H_5OH : 1Si(OC_2H_5)_4 : 6H_2O$ herzustellen, werden einer Menge von 37 g $C_2H_5OH$ zunächst 42 g $Si(OC_2H_5)_4$ und danach 22 g $H_2O$ zugefügt. Dieses Wasser ist zunächst mit Ammoniak alkalisch gemacht und zwar bis zu einem pH-Wert = 8. Durch Rühren bei 50 °C wird die Lösung klar, wonach diese in vier Formen gegossen wird. Diese Formen bestehen aus einseitig geschlossenen Rohren von etwa 15 mm Durchmesser und mit einer Länge von 150 mm, worin ein Stab Pyrexglas mit einem Durchmesser von 5 mm zentriert angeordnet ist. Die Formen sind mit einer dünnen Silikonkautschukschicht bedeckt, die als Antihaftschicht wirksam ist. Die Formen mit der Lösung werden in einen Autoklaven mit einem Inhalt von 500 ml gestellt. Nach dem Schliessen des Autoklaven wird $N_2$ zugefügt bis der Druck $80 \cdot 10^5Pa$ beträgt. Danach wird das Ganze mit 100 °C/Stunde bis 300 °C angewärmt. Der Gesamtdruck beträgt dann $230 \cdot 10^5Pa$. Nach dem Erreichen dieser Temperatur wird der Druck bei dieser Temperatur allmählich weggenommen durch Öffnung eines Ablasventils derart, dass nach etwa 45 Minuten kein Überdruck mehr vorhanden ist. Nach Abkühlen und Öffnen werden die Formen dem Autoklaven entnommen. Die Formen enthalten nun trockene poröse rohrförmige Gele, die behutsam ohne Brechen aus dem Rohr und von dem Stab geschoben werden können. Die Abmessungen entsprechen denen der Formen. Die auf diese Weise gebildeten Rohre haben eine relative Dichte von $0,14 \text{ g/cm}^3$ und sind nur in geringem Masse durchscheinend.

Ausführungsbeispiel II :

Eine Lösung aus 26 g Äthanol, 30 g $Si(OC_2H_5)_4$ und 20 g $H_2O$ (pH = 8), was einem Molverhältnis von 4 : 1 : 8 entspricht, wird auf dieselbe Art und Weise wie in dem Beispiel I hergestellt und in die Formen gebracht. Diese Formen bestehen aus einseitig geschlossenen Rohren mit einem Durchmesser von 15 mm und einer Länge von 150 mm und sind auf der Innenseite mit einer dünnen Silikonkautschukschicht bedeckt. Nach dem Füllen und Abschliessen des Autoklaven (Inhalt 500 ml) wird der Druck mit $N_2$ auf $80 \cdot 10^5Pa$ gebracht bevor das Ganze mit 100 °C/Stunde auf 300 °C aufgewärmt wird. Der Enddruck beträgt dann $190 \cdot 10^5Pa$. Nach dem Ablassen des Drucks und nach dem Abkühlen wird der Autoklav geöffnet und es werden die Formen herausgenommen. Die gebildeten porösen Stäbe gleiten problemlos aus den Formen, sind in geringem Masse durchscheinend und haben eine Dichte von $0,13 \text{ g/cm}^3$.

Auf entsprechende Weise durchgeführte Versuche, jedoch mit einem Vordruck von $40 \cdot 10^5Pa$ bzw. $10 \cdot 10^5Pa$ und einem Enddruck von 145 bzw. $90 \cdot 10^5Pa$ liefern Stäbe mit einer Dichte von $0,14 \text{ g/cm}^3$ bzw. $0,27 \text{ g/cm}^3$. Das letztgenannte Gel ist deutlich kleiner im Volumen als die ursprüngliche Lösung.

**Patentansprüche**

1. Verfahren zum Herstellen monolithischer Glaskörper, dadurch dass ein monolithisches Gel aus einer alkoholischen Lösung hergestellt wird, die ein Alkoxysilan enthält, wobei das monolithische Gel dadurch getrocknet wird, dass es in einem hermetisch geschlossenen Raum auf eine Temperatur über der kritischen Temperatur des Lösungsmittels erhitzt und daraufhin der Druck abgelassen wird, wonach das monolithische Gel durch Erhitzung verdichtet wird, dadurch gekennzeichnet, dass in dem hermetisch abgeschlossenen Raum ein Gas eingefüllt wird bis ein Vordruck erreicht ist, der so hoch ist, dass während der Erhitzung auf eine Temperatur über der kritischen Temperatur in dem Lösungsmittel keine Siedeerscheinungen auftreten.

2. Verfahren nach Anspruch 1, dadurch gekennzeichnet, dass die Bildung des Gels in dem hermetisch abgeschlossenen Raum erfolgt.

3. Verfahren nach den Ansprüchen 1 und 2, dadurch gekennzeichnet, dass bei Verwendung von Äthanol als Lösungsmittel ein Vordruck von mindestens $50 \cdot 10^5Pa$ eingestellt wird.

4. Verfahren nach den Ansprüchen 1 bis 3, dadurch gekennzeichnet, dass das Gel aus einer Lösung, die Tetraethoxysilan in Äthanol enthält, hergestellt wird.

5. Verfahren nach den Ansprüchen 1 bis 4, dadurch gekennzeichnet, dass eine Lösung hergestellt wird, die mindestens 1 mol Tetraethoxysilan je Liter Äthanol enthält, dass dieser Lösung je mol Tetraethoxysilan mindestens 2 mol Wasser, dessen pH-Wert mit einer flüchtigen Base auf einen pH-Wert zwischen 7 und 8 gebracht ist, zugefügt wird und dass die Gelbildung in dem Autoklaven erfolgt.

6. Verfahren nach den Ansprüchen 1 bis 5, dadurch gekennzeichnet, dass der Lösung je mol Tetraethoxysilan 4 bis 8 mol Wasser zugefügt wird.

7. Verfahren nach den Ansprüchen 1 bis 6, dadurch gekennzeichnet, dass je mol Tetraethoxysilan 5-7 mol Wasser zugefügt wird.

**Claims**

1. A method of manufacturing monolithic glass members by preparing a monolithic gel from an alcoholic solution comprising an alkoxy silane, in which the monolithic gel is dried by heating it in a hermetically closed container to a temperature above the critical temperature of the solvent and then reducing the pressure, after which the monolithic gel is heated to increase its density, characterized in that a gas is introduced into the hermetically closed container until a pre-pressure is attained which is so high that during the heating to a temperature above the critical temperature no boiling phenomena occur in the solvent.

2. A method as claimed in Claim 1, characterized in that the formation of the gel takes place in the hermetically closed container.

3. A method as claimed in Claims 1 and 2, characterized in that, when ethanol is used as a solvent a pre-pressure of at least $50 \cdot 10^5$Pa is used.

4. A method as claimed in Claims 1-3, characterized in that the gel is manufactured from a solution which contains tetraethoxysilane in ethanol.

5. A method as claimed in Claims 1-4, characterized in that a solution is prepared comprising at least 1 mol of tetraethoxysilane per litre of ethanol, that at least 2 mol of water are added to said solution per mol of tetraethoxysilane the pH of which is brought at a pH of between 7 and 8 by means of a volatile base, and that gelation takes place in the autoclave.

6. A method as claimed in Claims 1-5, characterized in that 4 to 8 mol of water per mol of tetraethoxy silane present are added to the solution.

7. A method as claimed in Claims 1-6, characterized in that 5 to 7 mol of water per mol of tetraethoxy silane are added.


## Revendications

1. Procédé pour la réalisation d'objets en verre monolithiques par préparation d'un gel à partir d'une solution alcoolique contenant un composé d'alkoxysilane, composé dans lequel le gel monolithique est séché par chauffage dans une enceinte fermée hermétiquement jusqu'à une température supérieure à la température critique du solvant, après quoi la pression est réduite et le gel est densifié par chauffage, caractérisé en ce que dans l'enceinte fermée hermétiquement est introduit un gaz jusqu'à l'obtention d'une pression préalable telle que lors de la période de chauffage à une température supérieure à la température critique dans le solvant, il ne peut pas se produire des phénomènes d'ébullition.

2. Procédé selon la revendication 1, caractérisé en ce que la formation du gel s'effectue dans l'enceinte fermée hermétiquement.

3. Procédé selon la revendication 1 et 2, caractérisé en ce que dans le cas d'utilisation d'éthanol comme solvant, on établit une pression préalable d'au moins $50 \cdot 10^5$Pa.

4. Procédé selon la revendication 1 à 3, caractérisé en ce que le gel est constitué par une solution contenant du tétraéthoxysilane dans de l'éthanol.

5. Procédé selon la revendication 1 à 4, caractérisé par la préparation d'une solution contenant au moins 1 mole de tétraéthoxysilane par litre d'éthanol, la solution étant additionnée, par mole de tétraéthoxysilane, d'au moins 2 moles d'eau, dont la valeur pH est portée à une valeur pH comprise entre 7 et 8 à l'aide d'une base volatile et que la formation de gel s'effectue dans l'autoclave.

6. Procédé selon la revendication 1 à 5, caractérisé en ce que la solution est additionnée de 4 à 8 moles d'eau par mole de tétraéthoxysilane.

7. Procédé selon la revendication 1 à 6, caractérisé en ce que par mole de tétraéthoxysilane, on ajoute 5 à 7 moles d'eau.